# EUROPÄISCHE PATENTSCHRIFT

(11) **EP 3 319 748 B1**
(45) Veröffentlichungstag und Bekanntmachung des Hinweises auf die Patenterteilung: **21.09.2022**
(21) Anmeldenummer: 16736478.5
(22) Anmeldetag: 08.07.2016
(51) Int. Cl.: B23B 31/02, B23B 37/00, B24B 1/04

(54) **VORRICHTUNG ZUR ERZEUGUNG EINER ULTRASCHALLSCHWINGUNG EINES WERKZEUGS UND ZUR MESSUNG VON SCHWINGUNGSPARAMETERN**
DEVICE FOR GENERATING AN ULTRASONIC OSCILLATION IN A TOOL AND MEASURING OSCILLATION PARAMETERS
DISPOSITIF POUR GÉNÉRER LA VIBRATION ULTRASONORE D'UN OUTIL ET POUR MESURER DES PARAMÈTRES DE VIBRATIONS

(30) Priorität: 08.07.2015 DE 102015212810
(43) Veröffentlichungstag der Anmeldung: 16.05.2018
(73) Patentinhaber: DMG MORI Ultrasonic Lasertec GmbH, 55758 Stipshausen (DE)
(72) Erfinder: KETELAER, Jens, 65205 Wiesbaden (DE)
(74) Vertreter: MERH-IP Matias Erny Reichl Hoffmann Patentanwälte PartG mbB
(86) Internationale Anmeldenummer: PCT/EP2016/066330
(87) Internationale Veröffentlichungsnummer: WO 2017/005917

(56) Entgegenhaltungen:
- WO-A1-2014/111973
- DE-A1-102011 076 712

## Beschreibung

### TECHNISCHES GEBIET

Die vorliegende Erfindung betrifft eine Vorrichtung zur Erzeugung einer Ultraschallschwingung eines Werkzeugs zur spanenden Ultraschall-Bearbeitung eines Werkstücks und zur Messung von Ultraschall-Schwingungsparametern der Ultraschallschwingung des Werkzeugs mit einem Werkzeughalter zur Aufnahme des Werkzeugs und einem Ultraschallwandler im Werkzeughalter zum Erzeugen der Ultraschallschwingung des Werkzeugs sowie ein Verfahren zum Messen von Ultraschall-Schwingungsparametern eines Werkzeugs zur spanenden Ultraschall-Bearbeitung eines Werkstücks.

### HINTERGRUND DER ERFINDUNG

Im Stand der Technik sind Werkzeugmaschinen zur spanenden Bearbeitung von Werkstücken bekannt, die eine Signalverarbeitungseinrichtung und Sende- und Empfängerdioden im Werkzeughalter aufweisen, mit denen Signale an eine Sende- und Empfangsstation übertragen werden können.

EP 0 229 399 A2 beschreibt dazu ein Spannfutter mit einer Anzahl in einer Radialebene in Umfangsabständen angeordneten Sendedioden und Empfärigerdioden und eine im Spannfutter eingebaute Signalverarbeitungseinrichtung mit Verstärkerteil. In der genannten Radialebene ist eine ortsfeste Sende-und Empfängerstation angeordnet. Ein im Spannfutter eingebauter Sensor erfasst die jeweiligen Betriebszustände, die von der Signalverarbeitungseinrichtung verarbeitet, von der Sende- und Empfängerstation abgefragt und über die Sendedioden des Spannfutters an die kombinierte Sende- und Empfangsstation übermittelt werden.

DE 20 2006 020 526 U1 beschreibt einen Drehübertrager mit einem Statorteil und einem Rotorteil, mit je einer statorseitigen und einer rotorseitigen, an einander zugewandten Enden über einen Luftspalt voneinander getrennten Kernpartie, mit je mindestens einer auf die statorseitige und die rotorseitige Kernpartie aufgewickelten Energiewicklungfür die Energieübertragung nach dem Transformatorprinzip, und mit einander paarweise zugeordneten, stator- und rotorseitigen Kopplungswindungen für die induktive Datenübertragung, die an eine Sende- und/oder Empfangselektronik angeschlossen sind, wobei das Statorteil in einem Gehäuse angeordnet ist, das aus einem Grundgehäuse zur Aufnahme einer Sende- und Empfangselektronik mit Anschlusskabel sowie einem am Grundgehäuse lösbar angeordneten Wechselgehäuse zur Aufnahme der Energiewicklung und der mindestens einen Kopplungswindung zusammengesetzt ist, und wobei zwischen dem Grundgehäuse und dem Wechselgehäuse lösbare Steckkontakte zur Herstellung von elektrischen Verbindungen angeordnet sind.

Im Stand der Technik außerdem bekannt sind Werkzeugköpfe, die eine induktive Stromübertragung für einen Stromverbraucher im Werkzeugkopf ermöglichen.

EP 0 719 199 B1 beschreibt dazu einen Werkzeugkopf für den Einsatz in Werkzeugmaschinen, mit einem Grundkörper, einem axial über den Grundkörper überstehenden, mit einer in einem maschinenseitigen Stator rotierenden Maschinenspindel kuppelbaren Werkzeugschaft, mit mindestens einem vorzugsweise als Verstellmotor für einem im Grundkörper angeordneten Schieber und/oder als Messelektronik ausgebildeten Stromverbraucher und mit einer externen Stromversorgungseinrichtung für den Stromverbraucher, wobei die Stromversorgungseinrichtung eine induktive Stromübertragungsstrecke mit einer in einem maschinenseitigen Spulengehäuse angeordneten Primärspule und einer in einem werkzeugkopfseitigen, den Werkzeugschaft ringförmigumgreifenden Spulengehäuse angeordneten Sekundärspule aufweist und wobei die beiden Spulengehäuse bei mit der Maschinenspindel gekuppeltem Werkzeugschaft durch einen Luftspalt voneinander getrennt sind.

Zudem sind Werkzeugmaschinen bekannt, bei denen bei einer spanenden Bearbeitung eines Werkstücks durch ein Werkzeug der Rotationsbewegung des Werkzeugs eine Ultraschallschwingung des Werkzeugs überlagert werden kann.

EP 1 763 416 B1 beschreibt in diesem Zusammenhang ein Werkzeug mit einem Werkzeughalter, der an einem ersten Ende eine Werkzeughalteraufnahme zum Adaptieren an eine drehbare Spindelnase, und an einem zweiten, dem ersten gegenüberliegenden Ende eine Werkzeugaufnahme aufweist, und mit einem in die Werkzeugaufnahme einsetzbaren Werkzeugkopf, wobei der Werkzeughalter einen Schwingungsmotor umfasst.

Bei einer solchen Werkzeugmaschine bilden ein Ultraschallwandler im Werkzeughalter, der die Ultraschallschwingung des Werkzeugs erzeugt, ein Schwingkörper und das im Werkzeughalter eingesetzte Werkzeug ein schwingungsfähiges System, das durch ein elektrisches Signal zu mechanischen Schwingungen angeregt wird, wobei man die größtmögliche mechanische Schwingungsamplitude erhält, wenn man das schwingungsfähige System mit seiner Resonanzfrequenz anregt.

Dabei tritt das Problem auf, dass sich die Resonanzfrequenz im Verlauf eines Bearbeitungsprozesses ändern kann. Dafür gibt es im Wesentlichen drei Gründe. Zum Einen kann sich das schwingungsfähige System oder Teile davon bei der Bearbeitung erwärmen, wodurch sich die Materialeigenschaften ändern. Dies führt zu einem Temperaturdrift der Resonanzfrequenz.

Zum Anderen wird die Schwingung durch den Kontakt des Werkzeugs mit dem zu bearbeitenden Werkstück gedämpft, wobei die Resonanzfrequenz des Systems bei einer gedämpften Schwingung niedriger ist als die freie Resonanzfrequenz des Systems.

Außerdem, wird durch die Ankopplung des Schwingungssystems an das Werkstück ein neues, gekoppeltes Schwingungssystem gebildet, dessen Resonanzfrequenz in der Regel höher ist als die freie Resonanzfrequenz. Diese drei Effekte treten in der Praxis kombiniert auf, wobei es von der konkreten Bearbeitungssituation abhängt, welcher Effekt dominiert.

Außerdem ist zu beachten, dass neben der Verschiebung der Resonanzfrequenz auch eine Änderung der Leistung eine Rolle spielt, da durch die Wechselwirkung des Werkzeugs mit dem Werkstück eine höhere Ausgangsspannung nötig sein kann, um die gleiche Leistung zu erzielen.

Wenn nun mit der freien Resonanzfrequenz angeregt wird, die tatsächliche Resonanzfrequenz des Systems sich bei der Bearbeitung jedoch von dieser unterscheidet, erhält man eine Schwingung des Werkzeugs mit kleinerer Amplitude, wodurch die Bearbeitung an Effizienz verliert.

Aus diesem Grund ist es wichtig, eine Änderung der Resonanzfrequenz des schwingfähigen Systems zu detektieren, um die Schwingungsparameter entsprechend anpassen zu können, so dass wieder die größtmögliche Schwingungsamplitude erreicht wird.

Aus Anwendungen des Ultraschall-Schweißens ist es bekannt, zu diesem Zweck sowohl die freie Resonanzfrequenz als auch eine Änderung der Resonanzfrequenz des Systems aus Ausgangswerten des Generators zu bestimmen, der das elektrische Signal für die mechanische Schwingung an den Piezo-Antrieb im Werkzeughalter liefert. Der Generator sieht von dem über eine induktive Übertragerstrecke angeschlossenen schwingungsfähigen System eine elektrische Impedanz, die frequenzabhängig ist und bei der mechanischen Resonanzfrequenz ein Minimum hat. Dementsprechend regelt der Generator im Fall einer Verschiebung der Resonanzfrequenz seine Frequenz so lange nach, bis er wieder das Impedanzminimum erreicht. Neben der Frequenz des Impedanzminimums ändert sich durch die Bearbeitung auch der Impedanzwert selbst, d.h. um die gleiche Leistung zu treiben ist eine höhere Ausgangsspannung notwendig.

Diese Methode eignet sich jedoch nicht für eine spanende Bearbeitung, weil dort, anders als beim Ultraschall-Schweißen die Impedanzkurven der genutzten Sonotroden mit eingesetzten Werkzeugen sehr viel komplizierter sind: Einerseits gibt es deutlich mehr Impedanzminima durch die vielen unterschiedlichen Schwingungsmoden der kompliziert geformten Werkzeuge. Andererseits sind die Einflussgrößen, die eine Verschiebung der Resonanzfrequenz bewirken, extremer in ihrer Wirkung, d.h. die Frequenzverschiebung kann derart groß sein, dass weitere Impedanzminima übersprungen werden. Beim Schweißen übt eine Sonotrode über den gesamten Prozess annähernd gleichen Druck auf das Werkstück aus. Dies führt zu einer einmaligen Frequenzverschiebung, die bei wiederkehrenden Prozessen gleich ist und bei der sich das Impedanzminimum immer eindeutig identifizieren lässt. Dagegen ändert sich die Frequenzverschiebung bei der spanenden Bearbeitung laufend aufgrund wechselnder Eingriffsverhältnisse des Werkzeugs in das Material und die Zuordnung ist wie oben beschrieben häufig nicht mehr nur aufgrund einer Impedanzmessung möglich.

Dies liegt daran, dass dort sehr viele unterschiedlich geformte Werkzeuge zum Einsatz kommen, zum Beispiel Bohrer und Fräser mit unterschiedlichen Abmessungen und Schneidwerkzeuge mit verschiedenen Schneidengeometrien, was zu einer größeren Varianz in der Form der Impedanzkurve in Vergleich zum Ultraschall-Schweißen führt.

Weiterhin ist bei einer spanenden Bearbeitung im Allgemeinen die auf das schwingfähige System wirkende Kraft deutlich größer, so dass die Veränderung der Impedanzkurve sehr viel stärker ausgeprägt ist.

Zudem lässt sich aufgrund der immer wiederkehrenden Bearbeitungsschritte beim Schweißen der dominierende Frequenzverschiebungseffekt gut vorhersagen, was die möglichen Reaktionen des Systems einschränkt. Dagegen müssen bei einer spanenden Bearbeitung alle Effekte berücksichtigt werden, weswegen die Vorhersagemöglichkeiten bzw. die Möglichkeiten zur Einschränkung der Regelungsparameter unzureichend sind.

Darüber hinaus ist es nicht möglich, Biegeschwingungen o.ä. von axialen Schwingungsmoden nur aufgrund der Impedanzmessung zu unterscheiden. Ebenso gibt es rein elektrische Resonanzen, die gar keine Schwingungen erzeugen. Diese parasitären Effekte können mit den bekannten Methoden nicht erkannt werden.

Aus der WO 2014/111973 A1 ist ferner eine Bearbeitungsvorrichtung bekannt, bei der mittels eines Schwingungserzeugers entsprechende Schwingungen in das Werkzeug eingetragen werden und die sensorisch erfassten Schwingungssignale ausgewertet werden.

### ZUSAMMENFASSUNG DER ERFINDUNG

Eine Aufgabe der vorliegenden Erfindung ist es daher, eine Vorrichtung zur Erzeugung einer Ultraschallschwingung eines Werkzeugs zur spanenden Ultraschall-Bearbeitung eines Werkstücks und zur Messung von Ultraschall-Schwingungsparametern der Ultraschallschwingung des Werkzeugs bereitzustellen, mit der die obigen Probleme vermieden werden.

Insbesondere ist es eine Aufgabe der vorliegenden Erfindung, eine Vorrichtung bereitzustellen, die es ermöglicht, eine höhere Bearbeitungsgenauigkeit bei der spanenden Ultraschallbearbeitung eines Werkstücks zu erreichen.

Des Weiteren ist es eine Aufgabe der vorliegenden Erfindung, ein Verfahren bereitzustellen, das es ermöglicht, eine höhere Bearbeitungsgenauigkeit bei der spanenden Ultraschallbearbeitung eines Werkstücks zu erreichen.

Diese Aufgaben werden gelöst durch eine Vorrichtung nach Anspruch 1 und ein Verfahren nach Anspruch 13. Die abhängigen Ansprüche beziehen sich auf vorteilhafte Ausführungsbeispiele der erfindungsgemäßen Vorrichtung bzw. des erfindungsgemäßen Verfahrens.

Die erfindungsgemäße Vorrichtung zur Erzeugung einer Ultraschallschwingung eines Werkzeugs zur spanenden Ultraschall-Bearbeitung eines Werkstücks und zur Messung von Ultraschall-Schwingungsparametern der Ultraschallschwingung des Werkzeugs weist auf: einen Werkzeughalter zur Aufnahme des Werkzeugs, einen Ultraschallwandler im Werkzeughalter zum Erzeugen der Ultraschallschwingung des Werkzeugs, eine Sensoreinrichtung im Werkzeughalter zum Erzeugen eines Sensorsignals basierend auf der Ultraschallschwingung des Werkzeugs, und eine Sensorsignal-Auswertevorrichtung zum Auswerten des Sensorsignals, wobei die Sensoreinrichtung ein einteiliges Element aus piezoelektrischem Material und eine Mehrzahl von Elektrodensegmenten zur Detektion von Ultraschall-Schwingungsanteilen in axialer Richtung des Werkzeugs sowie von Biegeschwingungsanteilen der Ultraschallschwingung des Werkzeugs aufweist. Beispielsweise kann der Ultraschallwandler als ein oder mehrere Piezo-Elemente ausgebildet sein, die auch als Sensoreinrichtung fungieren. Dabei wird das Anregungssignal für die Piezo-Elemente kurzzeitig unterbrochen und die ausklingende Schwingung der Piezo-Elemente als Spannungssignal detektiert. Zur Anregung und zur Schwingungsmessung kann durch entsprechende maschinenseitige Beschaltung dieselbe Übertragungsstrecke oder verschiedene Übertragungsstrecken genutzt werden, wobei bei der Nutzung von nur einer Übertragungsstrecke diese für die Schwingungsanregung mit dem Generator gekoppelt werden kann und für die Schwingungsmessung mit einer Elektronik gekoppelt werden kann.

Alternativ können der Ultraschallwandler und die Sensoreinrichtung als voneinander verschiedene Elemente der Vorrichtung ausgebildet sein, wobei zur Schwingungsanregung und zur Schwingungsmessung auch verschiedene Übertragungsstrecken genutzt werden können. Die Sensoreinrichtung kann beispielsweise als ein piezoelektrischer Sensor ausgebildet sein. Die Sensoreinrichtung kann auch als ein Dehnungsmessstreifen mit einer elektronischen Schaltung im Werkzeughalter zur Erzeugung des Sensorsignals ausgebildet sein.

Somit wird eine Vorrichtung bereitgestellt, mit der eine Ultraschallschwingung des Werkzeugs erzeugt und parallel dazu eine direkte Messung der Ultraschall-Schwingungsparameter des schwingenden Werkzeugs durchgeführt werden kann. So kann ein elektrisches Sensorsignal erzeugt werden, das einen direkten Rückschluss auf die mechanische Schwingung erlaubt. Das Sensorsignal kann zu einem oder mehreren Zeitpunkten oder in einem Zeitraum während der Bearbeitung erzeugt werden und ist somit ständig aktualisierbar. Dies ermöglicht eine Überwachung der Schwingung bzw. die Detektion von Veränderungen der Schwingungsparameter wie beispielsweise einer Verminderung der Schwingungsamplitude oder einer Änderung der Resonanzfrequenz.

Zudem ist die Sensoreinrichtung als Piezoelement-Plättchen ausgebildet, auf dem an zwei gegenüberliegenden Seiten Elektroden angebracht sind. Die Segmentierung der Elektroden hat den Vorteil, dass nicht nur axiale (längs der Werkzeugachse) Schwingungskomponenten des Werkzeugs, sondern auch Biege- oder Kippschwingungsanteile detektiert werden können, die bei seitlicher Belastung des Werkzeugs auftreten können. Dies hat den Vorteil, dass das Sensorsignal genauere Informationen über die mechanische Schwingung enthält.

Vorzugsweise ist die Sensoreinrichtung als ein piezoelektrisches Sensorelement ausgebildet und ist das Sensorsignal eine durch die Ultraschallschwingung des Werkzeugs bewirkte elektrische Spannung.

Dies hat den Vorteil, dass zur Erzeugung und Weiterleitung des Sensorsignals im Werkzeughalter keine zusätzliche Schaltung im Werkzeughalter bereitgestellt werden muss.

Vorzugsweise ist der Werkzeughalter rotierbar und weist die Vorrichtung ein mit der Sensoreinrichtung verbundenes Senderelement im Werkzeughalter und ein von dem Senderelement beabstandetes Empfängerelement zur berührungslosen Übertragung des Sensorsignals von dem Senderelement zu dem Empfängerelement auf.

Dabei kann das Empfängerelement beispielsweise außerhalb des Werkzeughalters in einem ortsfesten Teil einer Werkzeugmaschine mit der erfindungsgemäßen Vorrichtung angeordnet sein. Mit Hilfe des vom Senderelement beabstandeten maschinenseitigen Empfängerelements kann das Sensorsignal aus dem rotierbaren Werkzeughalter zur Auswertung herausgeführt werden.

Vorzugsweise weist die Sensoreinrichtung ein Isolierungselement zur elektrischen Isolation von dem Ultraschallwandler auf und weist die Vorrichtung eine Energieübertragungsvorrichtung zum Übertragen von Energie in den Werkzeughalter zur Energieversorgung des Ultraschallwandlers auf, wobei die Energieübertragungsvorrichtung von dem Senderelement und von dem Empfängerelement elektrisch isoliert ist.

Durch die elektrische Entkopplung der Sensoreinrichtung und der Sensorsignalbahn im Werkzeughalter vom Ultraschallschwingungsantrieb und dessen Energieversorgung erfolgt die Detektion der Werkzeugschwingung vollkommen unabhängig von der Erzeugung der Werkzeugschwingung, wodurch eine Verfälschung des Sensorsignals verhindert wird.

Vorzugsweise ist die Sensoreinrichtung bezüglich des Ultraschallwandlers so im Werkzeughalter angeordnet, dass die Erzeugung der Ultraschallschwingung des Werkzeugs durch den Ultraschallwandler und die Detektion der Ultraschallschwingung des Werkzeugs durch die Sensoreinrichtung im Wesentlichen in der gleichen Richtung erfolgt.

Dies hat den Vorteil, dass Eigenschwingungsformen des schwingfähigen Systems, die nicht der für den Bearbeitungsprozess vorteilhaften Ultraschallschwingung des Werkzeugs entsprechen, wie z.B. eine Biegeschwingung des Werkzeugs, nicht gemessen werden, sondern nur die relevanten Schwingformen durch das Sensorelement erkannt werden. Das Sensorelement und der Ultraschallwandler können beispielsweise im Werkzeughalter entlang der Werkzeugachse aufeinander folgend angeordnet sein, um eine axiale Schwingung zu erzeugen bzw. zu detektieren.

Vorzugsweise weist der Ultraschallwandler einen schichtartigen Aufbau aus mehreren ersten Piezo-Elementen auf, und weist die Sensoreinrichtung einen schichtartigen Aufbau aus einem zweiten Piezo-Element und einer Mehrzahl von Isolierungselementen auf, wobei der Ultraschallwandler und die Sensoreinrichtung mechanisch miteinander gekoppelt sind.

Dabei ist es vorteilhaft, wenn das zweite Piezo-Element an einem Ende des Ultraschallwandlers angeordnet ist, da dort die zu messende Schwingungsamplitude am größten ist. Beispielsweise können sechs erste Piezo-Elemente und das piezoelektrische Sensorelement längs der Werkzeugachse aufeinander folgend angeordnet sein. Somit können der Ultraschallwandler und das Sensorelement platzsparend im Werkzeughalter untergebracht werden. Durch die doppelte Anzahl an ersten Piezo-Elementen kann die doppelte Kraft auf das Werkzeug übertragen werden. In anderen Worten wird bei sechs ersten Piezo-Elementen die dreifache Kraft im Vergleich zu zwei ersten Piezo-Elementen auf das Werkzeug übertragen. Zudem ist bei einer größeren Anzahl an ersten Piezo-Elementen die Dämpfungsmasse groß, um selbsterregte Schwingungen (Rattern) gering zu halten.

Vorzugsweise sind mehrere mit der Sensoreinrichtung verbundene Senderelemente umfänglich am Werkzeughalter angeordnet.

Beispielsweise können vier Senderelemente in einem Abstand von jeweils 90 ° am Umfang des Werkzeughalters angeordnet sein. Dies hat den Vorteil, das Signalverluste bei der Übertragung des Sensorsignals aus dem Werkzeughalter in den maschinenseitigen Teil gering gehalten werden, insbesondere bei einer Rotation des Werkzeughalters.

Vorzugsweise sind das Senderelement und das Empfängerelement dazu eingerichtet, das Sensorsignal induktiv vom Senderelement zum Empfängerelement zu übertragen.

Diese Form der berührungslosen Übertragung hat den Vorteil, dass keine zusätzliche Schaltung oder Energieversorgung im Werkzeughalter oder ein Netzteil nötig ist, um das Sensorsignal aus dem Werkzeughalter herauszuführen, da die induktive Übertragung keine weitere Energie benötigt.

Vorzugsweise bildet das Senderelement mit dem Empfängerelement einen ersten Transformator, wobei das Senderelement einen ersten Ferritkern und eine Primärwicklung des ersten Transformators aufweist und das Empfängerelement einen zweiten Ferritkern und eine Sekundärwicklung des ersten Transformators aufweist, und die Energieübertragungsvorrichtung als ein zweiter Transformator mit einer Primärwicklung des zweiten Transformators und einer Sekundärwicklung des zweiten Transformators ausgebildet ist, wobei der erste Transformator und der zweite Transformator so angeordnet sind, dass die Übertragung des Sensorsignals von der Primärwicklung des ersten Transformators zu der Sekundärwicklung des ersten Transformators in einer im Wesentlichen senkrechten Richtung zu einer Übertragungsrichtung der Energie zur Energieversorgung des Ultraschallwandlers von der Primärwicklung des zweiten Transformators zu der Sekundärwicklung des zweiten Transformators erfolgt.

Dies hat den Vorteil, dass die jeweiligen Magnetfelder der beiden Transformatoren senkrecht zueinander orientiert sind, so dass sich Energieversorgung und Signalübertragung nur gering gegenseitig beeinflussen.

Alternativ sind das Senderelement und das Empfängerelement dazu eingerichtet, das Sensorsignal optisch vom Senderelement zum Empfängerelement zu übertragen.

Vorzugsweise ist das Senderelement in einer Bohrung an einer Außenseite des Werkzeughalters angeordnet.

Somit kann eine Bohrung, die bereits im Werkzeughalter vorhanden ist, z.B. zur Aufnahme eines Chips zur Speicherung von Daten, zusätzlich zur Aufnahme des Senderelements dienen.

Vorzugsweise weist die Vorrichtung eine parallel zu dem zweiten Transformator geschaltete Kapazität und/oder Induktivität zur Kompensation einer zwischen einem Generator und dem Werkzeughalter fließenden Bildleistung auf.

Dies hat den Vorteil, dass die Erwärmung des Systems durch die Blindleistung verringert werden kann. Die Vorrichtung kann darüber hinaus ein Relais zur Anpassung der Kompensation der zwischen dem Generator und dem Werkzeughalter fließenden Blindleistung aufweisen. Dies hat den Vorteil, dass so der Wert der Kapazität und/oder der Wert der Induktivität in einfacher Weise geändert werden kann.

Eine erfindungsgemäße Werkzeugmaschine zur spanenden Bearbeitung eines Werkstücks umfasst die erfindungsgemäße Vorrichtung und ein Gehäuse, in dem sowohl ein ortsfester Teil der Energieübertragungseinrichtung, der die Primärwicklung des zweiten Transformators und einen ersten Schalenkern des zweiten Transformators aufweist, als auch das Empfängerelement angeordnet sind.

Somit kann das Sensorsignal in den ortsfesten Teil der Werkzeugmaschine geleitet werden und dort ausgewertet werden.

Das erfindungsgemäße Verfahren zum Messen von Ultraschall-Schwingungsparametern eines Werkzeugs zur spanenden Ultraschall-Bearbeitung eines Werkstücks hat die Schritte: Versetzen des in einem Werkzeughalter aufgenommenen Werkzeugs in eine Ultraschallschwingung; Erzeugen eines Sensorsignals basierend auf der Ultraschallschwingung des Werkzeugs mittels einer Sensoreinrichtung im Werkzeughalter; Weiterleiten des Sensorsignals von der Sensoreinrichtung zu einem mit der Sensoreinrichtung verbundenen Senderelement im Werkzeughalter; Übertragen des Sensorsignals von dem Senderelement zu einem von dem Senderelement beabstandeten Empfängerelement; Weiterleiten des Sensorsignals von dem Empfängerelement zu einer Sensorsignal-Auswertevorrichtung; Auswerten des Sensorsignals in der Sensorsignal-Auswertevorrichtung zur Bestimmung der Ultraschall-Schwingungsparameter des Werkzeugs, wobei die Sensoreinrichtung ein einteiliges Element aus piezoelektrischem Material und eine Mehrzahl von Elektrodensegmenten zur Detektion von Ultraschall-Schwingungsanteilen in axialer Richtung des Werkzeugs sowie von Biegeschwingungsanteilen der Ultraschallschwingung des Werkzeugs aufweist.

Somit wird ein elektrisches Sensorsignal erzeugt, dass einen direkten Rückschluss auf die mechanische Schwingung erlaubt. Das Sensorsignal kann zu einem oder mehreren Zeitpunkten oder in einem Zeitraum während der Bearbeitung erzeugt werden. Somit können die Ultraschall-Schwingungsparameter ständig aktualisiert und Veränderungen der Schwingung kontinuierlich detektiert werden.

Die Segmentierung der Elektroden hat dabei den Vorteil, dass nicht nur axiale (längs der Werkzeugachse) Schwingungskomponenten des Werkzeugs, sondern auch Biege- oder Kippschwingungsanteile detektiert werden können, die bei seitlicher Belastung des Werkzeugs auftreten können. Dies hat den Vorteil, dass das Sensorsignal genauere Informationen über die mechanische Schwingung enthält.

Vorzugsweise ist das Sensorsignal eine durch die Ultraschallschwingung des Werkzeugs bewirkte elektrische Spannung.

Dies hat den Vorteil, dass aus einem solchen Sensorsignal die mechanischen Schwingungsparameter in einfacher Weise ermittelt werden können.

Vorzugsweise wird beim Auswerten des Sensorsignals eine Frequenz der Ultraschallschwingung des Werkzeugs aus einer Frequenz des Sensorsignals und/oder eine Amplitude der Ultraschallschwingung des Werkzeugs aus einer Amplitude des Sensorsignals bestimmt.

Somit können Resonanzfrequenzänderungen des schwingungsfähigen Systems bzw. eine Verringerung der Amplitude in einfacher Weise aus dem Sensorsignal bestimmt werden. Auf Basis des Vergleichs der eingestrahlten Frequenz und der aktuellen Resonanzfrequenz lässt sich damit das Schwingungssystem in Resonanz regeln, falls dies für den Bearbeitungsprozess vorteilhaft ist.

### KURZBESCHREIBUNG DER FIGUREN

- Fig. 1: zeigt einen Werkzeughalter eines Ausführungsbeispiels einer erfindungsgemäßen Vorrichtung in Schnittansicht.
- Fig. 2: zeigt einen Werkzeughalter eines Ausführungsbeispiels der erfindungsgemäßen Vorrichtung.
- Fig. 3: zeigt ein piezoelektrisches Sensorelement eines Ausführungsbeispiels einer erfindungsgemäßen Vorrichtung in Schnittansicht.
- Fig. 4A: zeigt eine Elektrode eines Ausführungsbeispiels einer erfindungsgemäßen Vorrichtung.
- Fig. 4B: zeigt eine Elektrode eines weiteren Ausführungsbeispiels einer erfindungsgemäßen Vorrichtung.
- Fig. 5A: zeigt ein Ausführungsbeispiel der erfindungsgemäßen Vorrichtung während der Bearbeitung.
- Fig. 5B: zeigt ein Ausführungsbeispiel der erfindungsgemäßen Vorrichtung während der Bearbeitung.
- Fig. 6: zeigt einen Teil einer erfindungsgemäßen Werkzeugmaschine mit einem Ausführungsbeispiel der erfindungsgemäßen Vorrichtung.
- Fig. 7: zeigt ein weiteres Ausführungsbeispiel einer erfindungsgemäßen Vorrichtung.

### DETAILLIERTE BESCHREIBUNG DER FIGUREN UND BEVORZUGTER AUSFÜHRUNGSBEISPIELE DER VORLIEGENDEN ERFINDUNG

Im Folgenden wird die vorliegende Erfindung detailliert anhand von Ausführungsbeispielen und der beispielhaften Figuren beschrieben und erläutert.

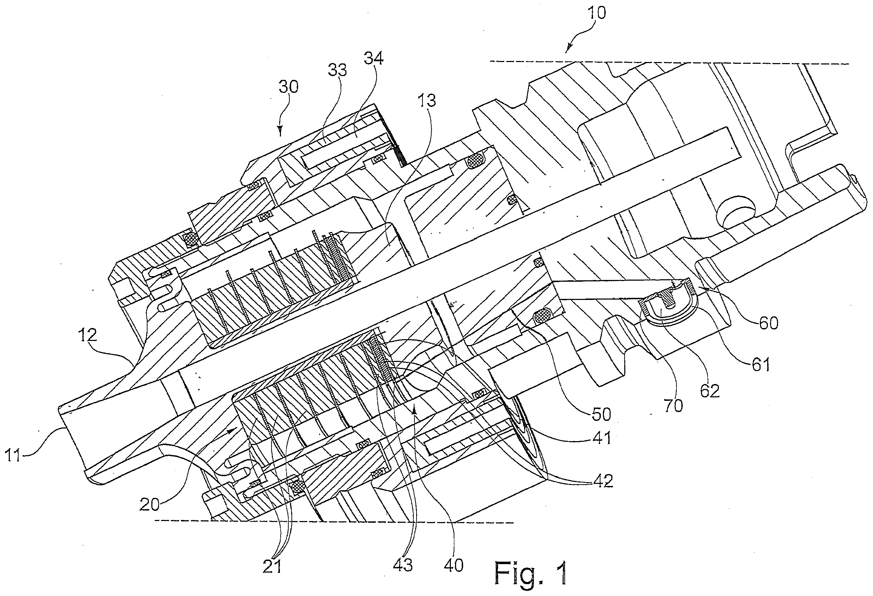

Fig. 1 zeigt einen Werkzeughalter 10 einer erfindungsgemäßen Vorrichtung. An einem Ende des Werkzeughalters 10 befindet sich ein Werkzeugaufnahmeabschnitt 11 zur Aufnahme eines Werkzeugs 90 (nicht gezeigt). Im Werkzeughalter 10 sind mehrere, z. B. sechs lochscheibenförmige erste Piezo-Elemente 21 gestapelt angeordnet, die über einen Übertragungsabschnitt 12 mit dem Werkzeugaufnahmeabschnitt 11 verbunden sind und einen Ultraschallwandler 20 zur Umwandlung einer elektrischen Spannung in eine mechanische Schwingung bilden. Über den Übertragungsabschnitt 12 wird die mechanische Schwingung der ersten Piezo-Elemente 21 auf das Werkzeug 90 übertragen. Die ersten Piezo-Elemente 21 können beispielsweise als Piezokeramikscheiben mit dazwischen angebrachten Elektroden ausgebildet sein. Die Energieversorgung des Ultraschallwandlers 20 erfolgt über einen Transformator (zweiter Transformator), der maschinenseitig aus einem ersten Schalenkern 31 und einer Primärwicklung 32 besteht (nicht gezeigt) und werkzeugseitig aus einem zweiten Schalenkern 33 und einer Sekundärspule 34 besteht, die als Ringelemente an der Außenseite des Werkzeughalters 10 angeordnet sind.

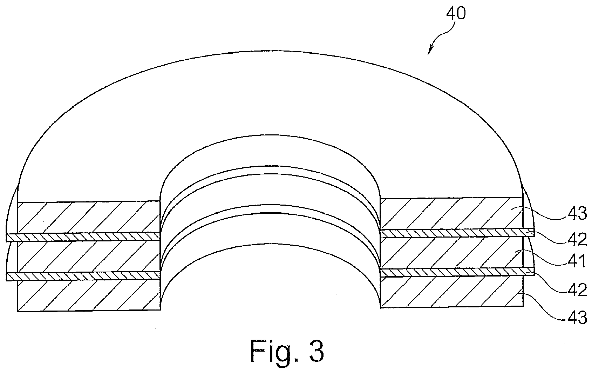

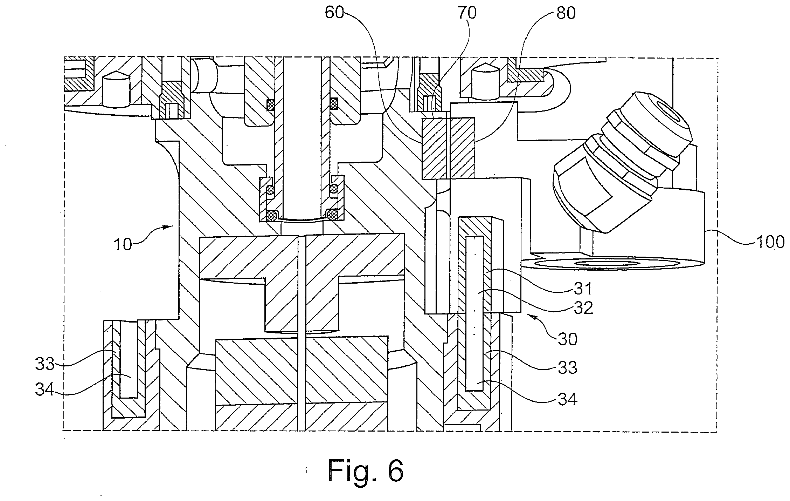

Auf einer dem Werkzeugaufnahmeabschnitt 11 abgewandten Seite des Stapels aus ersten Piezo-Elementen 21 ist ein lochscheibenförmiges piezoelektrisches Sensorelement als Sensoreinrichtung 40 angeordnet, das mechanisch mit den ersten Piezo-Elementen 21 gekoppelt ist, aber durch durch ein Isolierungselement 43, das aus einer Keramik-Lochscheibe bestehen kann, elektrisch von den ersten Piezo-Elementen 21 isoliert ist. Durch ein weiteres Isolierungselement 43 ist das piezoelektrische Sensorelement 40 von einem Befestigungselement 13, z.B. einer Befestigungsmutter, elektrisch isoliert. Das Befestigungselement 13 dient der Befestigung des piezoelektrischen Sensorelements 40 am Ultraschallwandler 20 und der Vorspannung der ersten Piezo-Elemente 21, da diese dynamisch belastet werden. Der Aufbau des piezoelektrischen Sensorelements 40 wird unten anhand von Fig. 3 genauer beschrieben. Die ersten Piezo-Elemente 21 und das piezoelektrische Sensorelement 40 sind gleich orientiert, wodurch zum Einen die Erzeugung und die Detektion der Schwingung in der gleichen Richtung ermöglicht wird und zum Anderen eine platzsparende Anordnung der Elemente im Werkzeughalter 10 erreicht wird. Das piezoelektrische Sensorelement 40 wandelt die mechanischen Schwingungen des schwingungsfähigen Systems, das aus dem Werkzeug 90, dem Übertragungsabschnitt 12, dem Ultraschallwandler 20 und dem piezoelektrischen Sensorelement 40 besteht, in ein Sensorsignal um, das als elektrische Spannung über eine Drahtverbindung 50 von dem piezoelektrischen Sensorelement 40 durch den Werkzeughalter 10 zu einem Senderelement 60 an der Außenseite des Werkzeughalters 10 übertragen wird. Von dem Senderelement 60 wird das Sensorsignal berührungslos zu einem maschinenseitigen Empfängerelement 80 (nicht gezeigt) übertragen. Das Senderelement 60 ist Teil eines weiteren Transformators (erster Transformator) und besteht aus einem ersten Ferritkern 61 und einer Primärwicklung 62; das Empfängerelement 80 ist ebenfalls Teil des ersten Transformators und besteht aus einem zweiten Ferritkern 81 und einer Sekundärwicklung 82. Somit kann das Sensorsignal induktiv vom Werkzeughalter 10 zu einer maschinenseitigen Sensorsignal-Auswertevorrichtung 110 (nicht gezeigt) übertragen werden. Alternativ ist auch eine optische Übertragung möglich, wobei das Senderelement 60 als LED und das Empfängerelement 80 als Fotodiode ausgebildet ist. Das Senderelement 60 kann so dimensioniert und positioniert sein, dass es in eine Bohrung 70 für einen Datenchip für Werkzeugdaten nach Norm DIN 69893 passt. Die Anordnungen der Energieübertragungsvorrichtung 30 und der Signalübertragungsvorrichtung bestehend aus Senderelement 60 und Empfängerelement 80 werden unten anhand von Fig. 6 genauer erläutert. Der Werkzeughalter 10 kann gegenüber einem ortsfesten Teil der Werkzeugmaschine (nicht gezeigt) rotierbar sein.

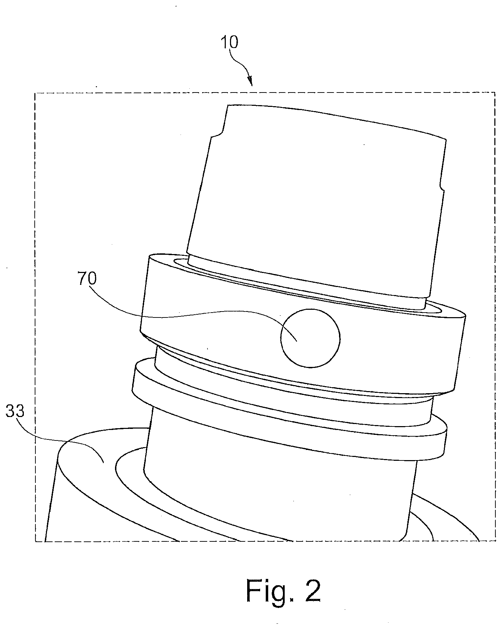

In Fig. 2 ist der Werkzeughalter 10 von der Seite gezeigt. An der Außenseite des Werkzeughalters 10 befindet sich die Bohrung 70, in der das Senderelement 60 angeordnet ist. In der Figur unten ist der Schalenkern 33 (zweiter Schalenkern) der Energieübertragungsvorrichtung 30 gezeigt, die den Ultraschallwandler 20 im Werkzeughalter 10 mit Energie versorgt. Das Werkzeug 90 (nicht gezeigt) kann in dieser Darstellung nach unten weisend im Werkzeugaufnahmeabschnitt 11 (nicht gezeigt) aufgenommen werden.

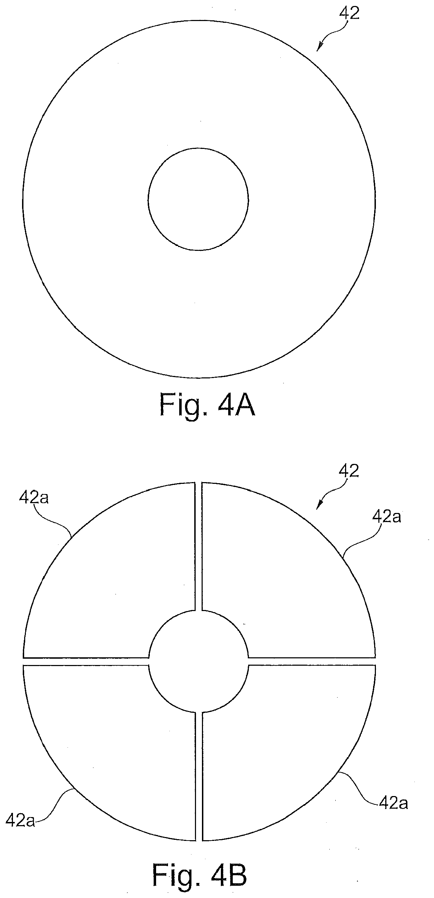

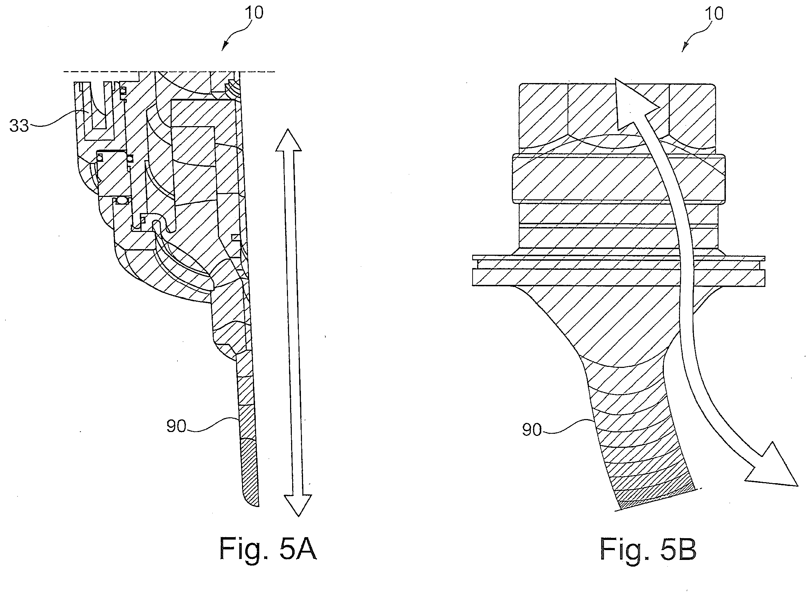

Fig. 3 zeigt in einem Schnittbild den Aufbau des piezoelektrischen Sensorelements 40. Das piezoelektrische Sensorelement 40 besteht aus einem einteiligen Element aus piezoelektrischem Material 41 wie z. B. einer piezoelektrischen Keramik, das die Form einer kreisförmigen Scheibe mit einem kreisförmigen zentralen Loch hat. Auf beiden Seiten des einteiligen Elements 41 sind Elektroden 42 angebracht, so dass durch das elektrische Feld, das durch die mechanische Schwingung hervorgerufen wird, eine elektrische Spannung an den Elektroden 42 erzeugt wird. Die Elektroden 42 können entweder einteilig als kreisförmige Scheiben mit einem kreisfömigen zentralen Loch analog zu dem einteiligen Element aus piezoelektrischem Material 41, jedoch mit geringerer Dicke als dieses (siehe Fig. 4A), oder als Scheibensegmente 42a, z. B. Scheibenviertel (siehe Fig. 4B) ausgebildet sein. Mit einer einteiligen Elektrodenscheibe 42 können axiale Schwingungskomponenten des schwingungsfähigen Systems entlang der Werkzeugachse detektiert werden; Elektrodensegmente 42a haben den Vorteil, dass damit Schwingungsanteile des Systems in zwei Achsen detektiert werden können. Dies wird unten anhand von Figs. 5A und 5B genauer erläutert. Darüber hinaus lassen sich durch mehrere Elektrodensegmente 42a und einer geeignet polarisierten Piezo-Keramik als einteiligem Element 41 auch Torsionsschwingungen des Werkzeugs 90 detektieren. An der jeweils anderen Elektrodenfläche, die nicht an das einteilige Element aus piezoelektrischem Material 41 angrenzt, ist je ein Isolierungselement 43 angeordnet, das ebenfalls als Kreisscheibe mit zentralem Loch ausgebildet sein kann und aus Keramik bestehen kann. Durch die Isolierungselemente 43 wird das piezoelektrische Sensorelement 40 von dem benachbarten Ultraschallwandler 20 und von anderen Teilen des Werkzeughalters 10, insbesondere von dem Befestigungselement 13 elektrisch isoliert, so dass das von dem piezoelektrischen Sensorelement 40 erzeugte Sensorsignal nicht gestört wird und nur über die Drahtverbindung 50 weitergeleitet wird.

In Figs. 5A und 5B sind verschiedene Schwingungsformen des schwingungsfähigen Systems gezeigt. In Fig. 5A schwingt das Werkzeug 90 im Werkzeughalter 10 in axialer Richtung, also in einer Richtung entlang der Werkzeugachse auf und ab, wie durch den senkrechten Pfeil angedeutet wird. In Fig. 5B ist ebenfalls eine axiale Schwingung des Werkzeugs 90 gezeigt, der jedoch eine Schwingung in einer Richtung senkrecht dazu überlagert ist. Eine solche überlagerte Schwingung kann beispielsweise durch eine seitliche Druckbelastung des Werkzeugs bei der spanenden Bearbeitung ausgelöst werden, die das Werkzeug 90 verbiegt. Für eine Detektion der Schwingungsanteile in axialer Richtung sind einteilige Elektroden 42, wie in Fig. 4A gezeigt, ausreichend. Wenn auch die Biegeschwingungsanteile in anderen Richtungen detektiert werden sollen, sind segmentierte Elektroden 42a, wie in Fig. 4B gezeigt, nötig, da dann die Elektrodensegmente 42a auf der Oberfläche des einteiligen Elements aus piezoelektrischem Material 41 unterschiedlich schwingen können.

In Fig. 6 ist die Anordnung der Energieübertragungsvorrichtung 30 zum Übertragen der Energie für den Ultraschallwandler 20 in den Werkzeughalter 10 und die Anordnung des Senderelements 60 und des Empfängerelements 80 zum Übertragen des Sensorsignals aus dem Werkzeughalter 10 als Schnittbild gezeigt.

Die Energieübertragungsvorrichtung 30 ist als Transformator (zweiter Transformator) mit einem ersten Schalenkern 31, einer Primärwicklung 32, einem zweiten Schalenkern 33 und einer Sekundärwicklung 34 ausgebildet, wobei die Öffnungen der Schalenkerne 31, 33 einander zugewandt sind und die Wicklungen 32, 34 in den jeweiligen Schalenkernen 31, 33 angeordnet sind. Der zweite Schalenkern 33 ist dabei ringförmig am Werkzeughalterumfang angeordnet; der erste Schalenkern 31 ist in axialer Richtung zum zweiten Schalenkern beabstandet in einem maschinenseitigen Gehäuse 100 positioniert und entweder als ein Ringsegment oder als Vollring um den Werkzeughalter 10 angeordnet. Die Energie wird somit in axialer Richtung in Fig. 6 von oben nach unten von der Primärwicklung 32 zu der Sekundärwicklung 34 induktiv übertragen.

In dem Gehäuse 100 befindet sich auch das Empfängerelement 80. Dem Empfängerelement 80 gegenüber ist in einem Abstand das Senderelement 60 in einer Bohrung 70 am Werkzeughalter 10 angeordnet. Das Sensorsignal wird somit in radialer Richtung in Fig. 6 von links nach rechts von dem Senderelement 60 berührungslos auf das Empfängerelement 80 übertragen. Es können auch mehrere Senderelemente 60 umfänglich am Werkzeughalter 10 angeordnet sein, um während einer Rotation des Werkzeughalters 10 Signalverluste bei der Übertragung des Sensorsignals zu reduzieren. Ebenso können mehrere Empfängerelemente 80 dem Senderelement 60 oder den Senderelementen 60 gegenüber angeordnet sein.

Bei der Rotation des Werkzeughalters 10 rotieren der zweite Schalenkern 33 und die Sekundärwicklung 34 der Energieübertragungsvorrichtung 30 sowie das Senderelement 60 mit dem Werkzeughalter 10 mit, während das Gehäuse 100 mit dem ersten Schalenkern 31 und der Primärwicklung 32 der Energieübertragungsvorrichtung 30 sowie mit dem Empfängerelement 80 z. B. an der Werkzeugspindel (nicht gezeigt) montiert ist und nicht rotiert.

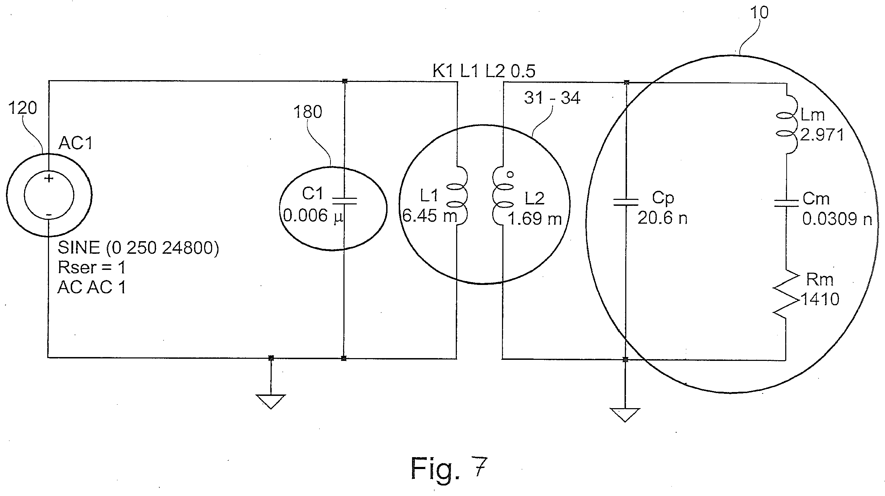

Fig. 7 zeigt ein Schaltbild der zuvor beschriebenen Komponenten mit einer beispielhaften Kompensationsschaltung. Darin ist das Ersatzschaltbild des Piezo-Antriebs im Werkzeughalter 10, des zweiten Transformators 31-34 mit der Primärwicklung 32 links und der Sekundärwicklung 34 rechts und ein Ultraschall-Generator 120 für die Anregung des Piezo-Antriebs gezeigt. Maschinenseitig ist parallel zum Transformator 31-34 eine Kapazität 180 geschaltet, deren Wert über ein Relais 190 (nicht gezeigt) geändert werden kann.

Je nach Phasenverschiebung zwischen Spannung und Strom fließt zwischen dem Generator 120 und dem Werkzeughalter 10 Blindleistung hin und her, die keine mechanische Arbeit verrichtet und nur zur Erwärmung des Systems beiträgt. Die Blindleistung kann durch die Kapazität 180 kompensiert werden. Da jedoch die kompensierte elektrische Impedanz einen Frequenzgang hat, funktioniert die Kompensation bei gleichbleibendem Wert der Kapazität 180 nur bei kleinen Änderungen der Anregungsfrequenz für den Piezo-Antrieb ausreichend gut. Bei einer großen Änderung wird der Wert der Kapazität 180 durch ein Relais 190 entsprechend geschaltet.

Die Kompensationsschaltung kann als eine Parallelschaltung, eine Serienschaltung oder eine Kombinationsschaltung aus Kapazitäten und/oder Induktivitäten ausgebildet sein und durch ein Relais 190 geschaltet werden.

### LISTE DER BEZUGSZEICHEN

- 10: Werkzeughalter
- 11: Werkzeugaufnahmeabschnitt
- 12: Übertragungsabschnitt
- 13: Befestigungselement

- 20: Ultraschallwandler
- 21: erstes Piezo-Element

- 30: Energieübertragungsvorrichtung
- 31: erster Schalenkern
- 32: Primärwicklung des zweiten Transformators
- 33: zweiter Schalenkern
- 34: Sekundärwicklung des zweiten Transformators

- 40: piezoelektrisches Sensorelement als Sensoreinrichtung
- 41: einteiliges Element aus piezoelektrischem Material
- 42: Elektrode
- 42a: Elektrodensegment
- 43: Isolierungselement

- 50: Drahtverbindung

- 60: Senderelement
- 61: erster Ferritkern
- 62: Primärwicklung des ersten Transformators

- 70: Bohrung
- 80: Empfängerelement
- 81: zweiter Ferritkern
- 82: Sekundärwicklung des ersten Transformators

- 90: Werkzeug
- 100: Gehäuse
- 110: Sensorsignal-Auswertevorrichtung
- 180: Kapazität
- 190: Relais

## Patentansprüche

1. Vorrichtung zur Erzeugung einer Ultraschallschwingung eines Werkzeugs (90) zur spanenden Ultraschall-Bearbeitung eines Werkstücks und zur Messung von Ultraschall-Schwingungsparametern der Ultraschallschwingung des Werkzeugs (90), mit
- einem Werkzeughalter (10) zur Aufnahme des Werkzeugs (90),
- einem Ultraschallwandler (20) im Werkzeughalter (10) zum Erzeugen der Ultraschallschwingung des Werkzeugs (90),
- einer Sensoreinrichtung (40) im Werkzeughalter (10) zum Erzeugen eines Sensorsignals basierend auf der Ultraschallschwingung des Werkzeugs (90), und
- einer Sensorsignal-Auswertevorrichtung (110) zum Auswerten des Sensorsignals,
**dadurch gekennzeichnet, dass**
die Sensoreinrichtung (40) ein einteiliges Element (41) aus piezoelektrischem Material und eine Mehrzahl von Elektrodensegmenten (42a) zur Detektion von Ultraschall-Schwingungsanteilen in axialer Richtung des Werkzeugs (90) sowie von Biegeschwingungsanteilen der Ultraschallschwingung des Werkzeugs (90) aufweist.

2. Vorrichtung nach Anspruch 1, wobei
die Sensoreinrichtung (40) als ein piezoelektrisches Sensorelement ausgebildet ist, und
das Sensorsignal eine durch die Ultraschallschwingung des Werkzeugs (90) bewirkte elektrische Spannung ist.

3. Vorrichtung nach einem der vorhergehenden Ansprüche, wobei
der Werkzeughalter (10) rotierbar ist, und
die Vorrichtung ein mit der Sensoreinrichtung (40) verbundenes Senderelement (60) im Werkzeughalter (10) und ein von dem Senderelement (60) beabstandetes Empfängerelement (80) zur berührungslosen Übertragung des Sensorsignals von dem Senderelement (60) zu dem Empfängerelement (80) aufweist.

4. Vorrichtung nach einem der vorhergehenden Ansprüche, wobei
die Sensoreinrichtung (40) ein Isolierungselement (43) zur elektrischen Isolation von dem Ultraschallwandler (20) aufweist, und
die Vorrichtung eine Energieübertragungsvorrichtung (30) zum Übertragen von Energie in den Werkzeughalter (10) zur Energieversorgung des Ultraschallwandlers (20) aufweist, wobei die Energieübertragungsvorrichtung (30) von dem Senderelement (60) und von dem Empfängerelement (80) elektrisch isoliert ist; und/oder
die Sensoreinrichtung (40) bezüglich des Ultraschallwandlers (20) so im Werkzeughalter (10) angeordnet ist, dass die Erzeugung der Ultraschallschwingung des Werkzeugs (90) durch den Ultraschallwandler (20) und die Detektion der Ultraschallschwingung des Werkzeugs (90) durch die Sensoreinrichtung (40) im Wesentlichen in der gleichen Richtung erfolgt.

5. Vorrichtung nach Anspruch 4, wobei
der Ultraschallwandler (20) einen schichtartigen Aufbau aus mehreren ersten Piezo-Elementen (21) aufweist, und
die Sensoreinrichtung (40) einen schichtartigen Aufbau aus einem zweiten PiezoElement (41, 42; 41, 42a) und einer Mehrzahl von Isolierungselementen (43) aufweist, wobei
der Ultraschallwandler (20) und die Sensoreinrichtung (40) mechanisch miteinander gekoppelt sind.

6. Vorrichtung nach einem der vorhergehenden Ansprüche, wobei
mehrere mit der Sensoreinrichtung (40) verbundene Senderelemente (60) umfänglich am Werkzeughalter (10) angeordnet sind.

7. Vorrichtung nach einem der Ansprüche 3 bis 6, wobei
das Senderelement (60) und das Empfängerelement (80) dazu eingerichtet sind, das Sensorsignal induktiv vom Senderelement (60) zum Empfängerelement (80) zu übertragen.

8. Vorrichtung nach einem der Ansprüche 3 bis 7, wobei
das Senderelement (60) mit dem Empfängerelement (80) einen ersten Transformator (61, 62, 81, 82) bildet, wobei
das Senderelement (60) einen ersten Ferritkern (61) und eine Primärwicklung (62) des ersten Transformators (61, 62, 81, 82) aufweist und das Empfängerelement (80) einen zweiten Ferritkern (81) und eine Sekundärwicklung (82) des ersten Transformators (61, 62, 81, 82) aufweist, und
die Energieübertragungsvorrichtung (30) als ein zweiter Transformator (31-34) mit einer Primärwicklung (32) des zweiten Transformators (31-34) und einer Sekundärwicklung (34) des zweiten Transformators (31-34) ausgebildet ist, wobei
der erste Transformator (61, 62, 81, 82) und der zweite Transformator (31-34) so angeordnet sind, dass die Übertragung des Sensorsignals von der Primärwicklung (62) des ersten Transformators (61, 62, 81, 82) zu der Sekundärwicklung (82) des ersten Transformators (61, 62, 81, 82) in einer im Wesentlichen senkrechten Richtung zu einer Übertragungsrichtung der Energie zur Energieversorgung des Ultraschallwandlers (20) von der Primärwicklung (32) des zweiten Transformators (31-34) zu der Sekundärwicklung (34) des zweiten Transformators (31-34) erfolgt.

9. Vorrichtung nach einem der Ansprüche 3 bis 6, wobei
das Senderelement (60) und das Empfängerelement (80) dazu eingerichtet sind, das Sensorsignal optisch vom Senderelement (60) zum Empfängerelement (80) zu übertragen.

10. Vorrichtung nach einem der Ansprüche 3 bis 9, wobei
das Senderelement (60) in einer Bohrung (70) an einer Außenseite des Werkzeughalters (10) angeordnet ist.

11. Vorrichtung nach einem der Ansprüche 8 bis 10, mit
einer parallel zu dem zweiten Transformator (31-34) geschalteten Kapazität (180) und/oder Induktivität zur Kompensation einer zwischen einem Generator (120) und dem Werkzeughalter (10) fließenden Bildleistung.

12. Werkzeugmaschine zur spanenden Bearbeitung eines Werkstücks, mit
der Vorrichtung nach einem der Ansprüche 3 bis 11, und
einem Gehäuse (100), in dem sowohl ein ortsfester Teil der Energieübertragungseinrichtung (30), der die Primärwicklung (32) des zweiten Transformators (31-34) und einen ersten Schalenkern (31) des zweiten Transformators (31-34) aufweist, als auch das Empfängerelement (80) angeordnet sind.

13. Verfahren zum Messen von Ultraschall-Schwingungsparametern eines Werkzeugs (90) zur spanenden Ultraschall-Bearbeitung eines Werkstücks mit den Schritten:
- Versetzen des in einem Werkzeughalter (10) aufgenommenen Werkzeugs (90) in eine Ultraschallschwingung;
- Erzeugen eines Sensorsignals basierend auf der Ultraschallschwingung des Werkzeugs (90) mittels einer Sensoreinrichtung (40) im Werkzeughalter (10);
- Weiterleiten des Sensorsignals von der Sensoreinrichtung (40) zu einem mit der Sensoreinrichtung (40) verbundenen Senderelement (60) im Werkzeughalter (10);
- Übertragen des Sensorsignals von dem Senderelement (60) zu einem von dem Senderelement (60) beabstandeten Empfängerelement (80);
- Weiterleiten des Sensorsignals von dem Empfängerelement (80) zu einer Sensorsignal-Auswertevorrichtung (110);
- Auswerten des Sensorsignals in der Sensorsignal-Auswertevorrichtung (110) zur Bestimmung der Ultraschall-Schwingungsparameter des Werkzeugs (90),
**dadurch gekennzeichnet, dass**
die Sensoreinrichtung (40) ein einteiliges Element (41) aus piezoelektrischem Material und eine Mehrzahl von Elektrodensegmenten (42a) zur Detektion von Ultraschall-Schwingungsanteilen in axialer Richtung des Werkzeugs (90) sowie von Biegeschwingungsanteilen der Ultraschallschwingung des Werkzeugs (90) aufweist.

14. Verfahren nach Anspruch 13, wobei
das Sensorsignal eine durch die Ultraschallschwingung des Werkzeugs (90) bewirkte elektrische Spannung ist.

15. Verfahren nach einem der Ansprüche 13 bis 14, wobei
beim Auswerten des Sensorsignals eine Frequenz der Ultraschallschwingung des Werkzeugs (90) aus einer Frequenz des Sensorsignals und/oder eine Amplitude der Ultraschallschwingung des Werkzeugs (90) aus einer Amplitude des Sensorsignals bestimmt wird.

## Claims

1. A device for generating an ultrasonic vibration of a tool (90) for ultrasonic machining of a workpiece and for measuring ultrasonic vibration parameters of the ultrasonic vibration of said tool (90), comprising
- a tool holder (10) for receiving said tool (90),
- an ultrasonic transducer (20) in said tool holder (10), said ultrasonic transducer (10) configured to generate the ultrasonic vibration of said tool (90),
- a sensor means (40) in said tool holder (10), said sensor means (40) configured to generate a sensor signal based on the ultrasonic vibration of said tool (90), and
- a sensor signal evaluation device (110) configured to evaluate the sensor signal;
**characterized in that**
said sensor means (40) comprises a one-piece element (41) made of piezoelectric material and a plurality of electrode segments (42a) configured to detect ultrasonic vibration portions in an axial direction of said tool (90) and bending vibration portions of the ultrasonic vibration of said tool (90).

2. The device according to claim 1, wherein
said sensor means (40) is a piezoelectric sensor element, and
the sensor signal is an electric voltage caused by the ultrasonic vibration of said tool (90).

3. The device according to one of the preceding claims, wherein
said tool holder (10) is rotatable, and
said device further comprises a transmitter element (60) connected to said sensor means (40) in said tool holder (10) and a receiver element (80) spaced apart from said transmitter element (60) for contactless transmission of the sensor signal from said transmitter element (60) to said receiver element (80).

4. The device according to one of the preceding claims, wherein
said sensor means (40) comprises an insulating element (43) for electrically insulating said ultrasonic transducer (20), and
said device further comprises an energy transmission device (30) configured to transmit energy into said tool holder (10) in order to supply energy to said ultrasonic transducer (20), wherein said energy transmission device (30) is electrically insulated from said transmitter element (60) and from said receiver element (80); and/or
said sensor means (40) is arranged in said tool holder (10) with respect to said ultrasonic transducer (20) such that the generation of the ultrasonic vibration of said tool (90) by means of said ultrasonic transducer (20) and the detection of the ultrasonic vibration of said tool (90) by means of said sensor means (40) occur substantially in the same direction.

5. The device according to claim 4, wherein
said ultrasonic transducer (20) has a layer-like structure consisting of a plurality of first piezo elements (21), and
said sensor means (40) has a layer-like structure consisting of a second piezo element (41, 42; 41, 42a) and a plurality of insulating elements (43), wherein
said ultrasonic transducer (20) and said sensor means (40) are mechanically coupled to one another.

6. The device according to one of the preceding claims, wherein
a plurality of transmitter elements (60) connected to said sensor means (40) are arranged along the circumference of said tool holder (10).

7. The device according to one of claims 3 to 6, wherein
said transmitter element (60) and said receiver element (80) are configured to transmit the sensor signal inductively from said transmitter element (60) to said receiver element (80).

8. The device according to one of claims 3 to 7, wherein
said transmitter element (60) forms, with said receiver element (80), a first transformer (61, 62, 81, 82), wherein
said transmitter element (60) comprises a first ferrite core (61) and a primary winding (62) of said first transformer (61, 62, 81, 82) and said receiver element (80) comprises a second ferrite core (81) and a secondary winding (82) of said first transformer (61, 62, 81, 82), and
said energy transmission device (30) is arranged as a second transformer (31-34) comprising a primary winding (32) of said second transformer (31-34) and a secondary winding (34) of said second transformer (31-34), wherein
said first transformer (61, 62, 81, 82) and said second transformer (31-34) are arranged such that the sensor signal is transmitted from said primary winding (62) of said first transformer (61, 62, 81, 82) to said secondary winding (82) of said first transformer (61, 62, 81, 82) in a substantially perpendicular direction in relation to a transmission direction of the energy for supplying energy to said ultrasonic transducer (20) from said primary winding (32) of said second transformer (31-34) to said secondary winding (34) of said second transformer (31-34).

9. The device according to one of claims 3 to 6, wherein
said transmitter element (60) and said receiver element (80) are configured to transmit the sensor signal optically from said transmitter element (60) to said receiver element (80).

10. The device according to one of claims 3 to 9, wherein
said transmitter element (60) is arranged in a bore (70) on an external side of said tool holder (10).

11. The device according to one of claims 8 to 10, comprising
a capacitance (180) and/or an inductance connected in parallel to said second transformer (31-34) to compensate for a reactive power flowing between a generator (120) and said tool holder (10).

12. A machine tool for machining a workpiece, comprising
the device according to one of claims 3 to 11, and
a housing (100) in which both a stationary part of said energy transmission device (30), which includes said primary winding (32) of said second transformer (31-34) and a first pot core (31) of said second transformer (31-34), and said receiver element (80) are arranged.

13. A method for measuring ultrasonic vibration parameters of a tool (90) for ultrasonic machining of a workpiece, said method comprising:
- inducing an ultrasonic vibration in a tool (90) received in a tool holder (10);
- generating a sensor signal on the basis of the ultrasonic vibration of said tool (90) using sensor means (40) in said tool holder (10);
- transferring the sensor signal from said sensor means (40) to a transmitter element (60), which is connected to said sensor means (40), in said tool holder (10);
- transmitting the sensor signal from said transmitter element (60) to a receiver element (80) spaced apart from said transmitter element (60);
- transferring the sensor signal from said receiver element (80) to a sensor signal evaluation device (110);
- evaluating the sensor signal in said sensor signal evaluation device (110) in order to determine the ultrasonic vibration parameters of said tool (90);
**characterized in that**
said sensor means (40) comprises a one-piece element (41) made of piezoelectric material and a plurality of electrode segments (42a) configured to detect ultrasonic vibration portions in an axial direction of said tool (90) and bending vibration portions of the ultrasonic vibration of said tool (90).

14. The method according to claim 13, wherein
the sensor signal is an electric voltage caused by the ultrasonic vibration of said tool (90).

15. The method according to one of claims 13 to 14, wherein
during the evaluation of the sensor signal, a frequency of the ultrasonic vibration of said tool (90) is determined from a frequency of the sensor signal and/or an amplitude of the ultrasonic vibration of said tool (90) is determined from an amplitude of the sensor signal.

## Revendications

1. Dispositif destiné à produire une vibration ultrasonore d'un outil (90) pour l'usinage d'une pièce par ultrasons et par enlèvement de copeaux, et pour mesurer des paramètres de vibration ultrasonore de la vibration ultrasonore de l'outil (90), avec
- un porte-outil (10) pour recevoir l'outil (90),
- un transducteur ultrasonore (20) dans le porte-outil (10) pour produire la vibration ultrasonore de l'outil (90),
- un équipement de capteur (40) dans le porte-outil (10) pour produire un signal de capteur sur la base de la vibration ultrasonore de l'outil (90), et
- un dispositif d'évaluation de signal de capteur (110) pour évaluer le signal de capteur,
**caractérisé en ce que**
l'équipement de capteur (40) présente un élément d'une seule pièce (41) dans un matériau piézoélectrique et une pluralité de segments d'électrode (42a) pour la détection de composantes de vibration ultrasonore dans la direction axiale de l'outil (90) ainsi que de composantes de vibration de flexion de la vibration ultrasonore de l'outil (90).

2. Dispositif selon la revendication 1, dans lequel
l'équipement de capteur (40) est conçu en tant qu'élément de capteur piézoélectrique, et
le signal de capteur est une tension électrique provoquée par la vibration ultrasonore de l'outil (90).

3. Dispositif selon l'une des revendications précédentes, dans lequel
le porte-outil (10) peut être mis en rotation, et
le dispositif présente un élément émetteur (60) relié à l'équipement de capteur (40) dans le porte-outil (10) et un élément récepteur (80) espacé de l'élément émetteur (60) pour la transmission sans contact du signal de capteur depuis l'élément émetteur (60) vers l'élément récepteur (80).

4. Dispositif selon l'une des revendications précédentes, dans lequel
l'équipement de capteur (40) présente un élément d'isolation (43) pour une isolation électrique par rapport au transducteur ultrasonore (20), et
le dispositif présente un dispositif de transmission d'énergie (30) pour transmettre de l'énergie jusque dans le porte-outil (10) afin d'approvisionner en énergie le transducteur ultrasonore (20), dans lequel le dispositif de transmission d'énergie (30) est électriquement isolé de l'élément émetteur (60) et de l'élément récepteur (80) ; et/ou
l'équipement de capteur (40) est agencé dans le porte-outil (10) par rapport au transducteur ultrasonore (20) de telle sorte que la production de la vibration ultrasonore de l'outil (90) se produise au travers du transducteur ultrasonore (20) et la détection de la vibration ultrasonore de l'outil (90) se produise au travers de l'équipement de capteur (40), essentiellement dans la même direction.

5. Dispositif selon la revendication 4, dans lequel
le transducteur ultrasonore (20) présente une construction stratifiée de plusieurs premiers éléments piézo (21), et
l'équipement de capteur (40) présente une construction stratifiée d'un second élément piézo (41, 42; 41, 42a) et d'une pluralité d'éléments d'isolation (43), dans lequel
le transducteur ultrasonore (20) et l'équipement de capteur (40) sont mécaniquement couplés ensemble.

6. Dispositif selon l'une des revendications précédentes, dans lequel
plusieurs éléments émetteurs (60) reliés à l'équipement de capteur (40) sont agencés de manière circonférentielle contre le porte-outil (10).

7. Dispositif selon l'une des revendications 3 à 6, dans lequel
l'élément émetteur (60) et l'élément récepteur (80) sont configurés pour transmettre le signal de capteur de façon inductive depuis l'élément émetteur (60) vers l'élément récepteur (80).

8. Dispositif selon l'une des revendications 3 à 7, dans lequel l'élément émetteur (60) forme un premier transformateur (61, 62, 81, 82) avec l'élément récepteur (80), dans lequel
l'élément émetteur (60) présente un premier noyau de ferrite (61) et un enroulement primaire (62) du premier transformateur (61, 62, 81, 82) et l'élément récepteur (80) présente un second noyau de ferrite (81) et un enroulement secondaire (82) du premier transformateur (61, 62, 81, 82), et
le dispositif de transmission d'énergie (30) est conçu en tant que second transformateur (31-34) avec un enroulement primaire (32) du second transformateur (31-34) et un enroulement secondaire (34) du second transformateur (31-34), dans lequel
le premier transformateur (61, 62, 81, 82) et le second transformateur (31-34) sont agencés de sorte que la transmission du signal de capteur depuis l'enroulement primaire (62) du premier transformateur (61, 62, 81, 82) vers l'enroulement secondaire (82) du premier transformateur (61, 62, 81, 82) se produise dans une direction essentiellement perpendiculaire à une direction de transmission de l'énergie vers l'approvisionnement en énergie du transducteur ultrasonore (20) depuis l'enroulement primaire (32) du second transformateur (31-34) vers l'enroulement secondaire (34) du second transformateur (31-34).

9. Dispositif selon l'une des revendications 3 à 6, dans lequel
l'élément émetteur (60) et l'élément récepteur (80) sont configurés pour transmettre le signal de capteur de façon optique depuis l'élément émetteur (60) vers l'élément récepteur (80).

10. Dispositif selon l'une des revendications 3 à 9, dans lequel l'élément émetteur (60) est agencé dans un alésage (70) sur un côté extérieur du porte-outil (10).

11. Dispositif selon l'une des revendications 8 à 10, avec
une capacité (180) montée en parallèle du second transformateur (31-34) et/ou une inductance pour compenser une puissance circulant entre un générateur (120) et le porte-outil (10).

12. Machine-outil destinée à usiner une pièce par enlèvement de copeaux, avec
le dispositif selon l'une des revendications 3 à 11, et
un logement (100) dans lequel sont agencés tant une partie fixe du dispositif de transmission d'énergie (30), qui présente l'enroulement primaire (32) du second transformateur (31-34) et un premier noyau en coquille (31) du second transformateur (31-34), que l'élément récepteur (80).

13. Procédé destiné à mesurer des paramètres de vibration ultrasonore d'un outil (90) pour l'usinage d'une pièce par ultrasons et par enlèvement de copeaux avec les étapes consistant à :
- mettre en vibration ultrasonore la pièce (90) reçue dans un porte-outil (10) ;
- produire un signal de capteur sur la base de la vibration ultrasonore de l'outil (90) au moyen d'un équipement de capteur (40) dans le porte-outil (10) ;
- transférer le signal de capteur depuis l'équipement de capteur (40) vers un élément émetteur (60) relié à l'équipement de capteur (40) dans le porte-outil (10) ;
- transmettre le signal de capteur depuis l'élément émetteur (60) vers un élément récepteur (80) espacé de l'élément émetteur (60) ;
- transférer le signal de capteur depuis l'élément récepteur (80) vers un dispositif d'évaluation de signal de capteur (110) ;
- évaluer le signal de capteur dans le dispositif d'évaluation de signal de capteur (110) pour déterminer les paramètres de vibration ultrasonore de l'outil (90),
**caractérisé en ce que**
l'équipement de capteur (40) présente un élément d'une seule pièce (41) dans un matériau piézoélectrique et une pluralité de segments d'électrode (42a) pour la détection de composantes de vibration ultrasonore dans la direction axiale de l'outil (90) ainsi que de composantes de vibration de flexion de la vibration ultrasonore de l'outil (90).

14. Procédé selon la revendication 13, dans lequel
le signal de capteur est une tension électrique provoquée par la vibration ultrasonore de l'outil (90).

15. Procédé selon l'une des revendications 13 à 14, dans lequel
lors de l'évaluation du signal de capteur, une fréquence de la vibration ultrasonore de l'outil (90) est déterminée à partir d'une fréquence du signal de capteur et/ou une amplitude de la vibration ultrasonore de l'outil (90) est déterminée à partir d'une amplitude du signal de capteur.
